(19) Europäisches Patentamt
European Patent Office
Office européen des brevets

(11) Veröffentlichungsnummer: **0 432 393 A1**

(12) **EUROPÄISCHE PATENTANMELDUNG**

(21) Anmeldenummer: 90118946.4

(22) Anmeldetag: 04.10.90

(51) Int. Cl.5 **B60G 5/053**, F16C 17 10

(30) Priorität: 09.11.89 DE 3937301

(43) Veröffentlichungstag der Anmeldung:
19.06.91 Patentblatt 91/25

(84) Benannte Vertragsstaaten:
AT CH DE ES FR GB IT LI NL SE

(71) Anmelder: MAN Nutzfahrzeuge
Aktiengesellschaft
Dachauer Strasse 667 Postfach 50 06 20
W-8000 München 50(DE)

(72) Erfinder: Stummer, Josef
Glockenbecherstrasse 16a
W-8000 München 45(DE)
Erfinder: Jüttner, Klaus
Schachblumenweg 9
W-8000 München 70(DE)

(54) **Doppelgelenklager.**

(57) Die Doppelgelenklagerung an einem Doppe-lachsaggregat von Nutzfahrzeugen besteht aus ei-nem Außenteil (1) des Doppelgelenklagers, das ein-stückig ist und aus einem Innenteil, das mit den beiden Teilen (2, 2′) zweistückig ausgebildet ist. Das Außenteil (1) und die beiden Innenteile (2, 2′) sind über die Stoßstelle (3) der Innenteile (2, 2′) so ange-paßt, daß sie als fertige Montageeinheit mit definier-tem Lagerspiel ausgelegt und montagefertig sind.

Fig. 2

EP 0 432 393 A1

## DOPPELGELENKLAGER

Die Erfindung bezieht sich auf eine Blattfederlagerung an Doppelachsaggregaten von Nutzfahrzeugen sowie Radlagerungen mit zwei im Abstand zueinander angeordneten Gelenklagern.

Es ist bekannt, als Lagerung von Doppelachsaggregaten in Nutzfahrzeugen sowie als Radlagerung zwei im Abstand zueinander angeordnete Kegelrollenlager oder Gelenklager vorzusehen. Diese Lagerelemente nehmen radial die Belastung aus Eigengewicht und Nutzlast auf und übertragen diese Lasten auf die Blattfedern und Achsen. Axial werden die Lagerelemente aus der Kurvenfahrt erheblich belastet. Außerdem erfolgt eine pendelnde Belastung aus Unebenheiten im Gelände und auf der Straße. Kegelrollenlager sind teuer und sehr empfindlich bei kleinen Pendelbewegungen unter hoher Last. Sie müssen deshalb in sehr präziser Einstellung vorgespannt werden, damit alle Rollen möglichst gleichmäßig tragen. Der Mohtageaufwand ist erheblich, und die Montage kann nur von fachlich hochqualif iziertem Personal durchgeführt werden. Gelenklager werden im Gegensatz zu Kegelrollenlagern mit definiertem Spiel eingestellt. Dies ist notwendig aus Gründen der Lagergeometrie und wegen der Lagerschmierung. Bei der Lagermontage wird das vorgeschriebene Spiel durch Auswahl und Einsetzen passender Beilagescheiben, gegebenenfalls mit nochmaliger Nachkorrektur, erzielt. Zum Schluß wird das Lagerspiel nochmals kontrolliert, und anschließend das Lagergehäuse mit Fett gefüllt. Es ist klar ersichtlich, daß der Montageaufwand bei Gelenklagern bekannter Ausführung auch nicht geringer ist als bei Kegelrollenlagern.

Der Erfindung liegt nunmehr die Aufgabe zugrunde, ein montagefreundliches Gelenklager, das wenig Wartungsaufwand erfordert, zu schaffen.

Dies wird dadurch erreicht, daß das Außenteil des Gelenklagers einstückig und das Innenteil zweistückig ausgebildet sind und daß das Außenteil und die Innenteile, über die Stoßstelle der Innenteile angepaßt, mit definiertem Lagerspiel als fertig montierte Einbaueinheit ausgelegt sind. Solcherart ist das Doppelgelenklager schon beim Hersteller auf das vorgeschriebene Lagerspiel gefertigt und eingestellt, so daß es beim Einbau in das Lagergehäuse keiner weiteren Anpassung und Einstellung bedarf. Es ist somit in der Serie für eine gleichbleibende Qualität der sehr diffizilen Lagereinstellung gesorgt. Die gleichen Vorteile gelten in noch vermehrtem Maß bei Reparaturarbeiten, wo nicht immer qualifizierte Fachkräfte sowie Montagemöglichkeiten zur Verfügung stehen. Weiterhin wird die Lagerhaltung vereinfacht, indem nur noch ein Kompletteil und nicht mehrere Einzelteile auf Leer gehalten werden müssen.

Nach einem weiteren Merkmal der Erfindung weist das Außenteil eine Kammer für Schmierstoffe auf. Damit werden, im Zusammenhang mit der Anordnung entsprechender Dichtungen, lange Nachschmierfristen gewährleistet.

Nach einer vorteilhaften Ausbildung der Erfindung sind die beiden zum Außenteil angepaßten Innenteile mittels einer Halteklammer verbunden, die innen oder außen im Bereich der Stoßstelle angeordnet ist. Auf diese Weise entsteht eine versand- und transportfähige Lagereinheit, die nicht mehr in

Einzelteile zerfällt und die auch gleichermaßen als Montageeinheit in das Lagergehäuse und auf die Welle einschiebbar ist.

Die Erfindung ist in einem Ausführungsbeispiel dargestellt und beschrieben.

Es zeigen:

Fig. 1 ein Doppelachsaggregat in der Seitenansicht,

Fig. 2 Schnitt A-B gemäß Fig. 1.

Fig. 3 - 6 Einzelheiten an der Stoßstelle der beiden Gelenklagerinnenteile.

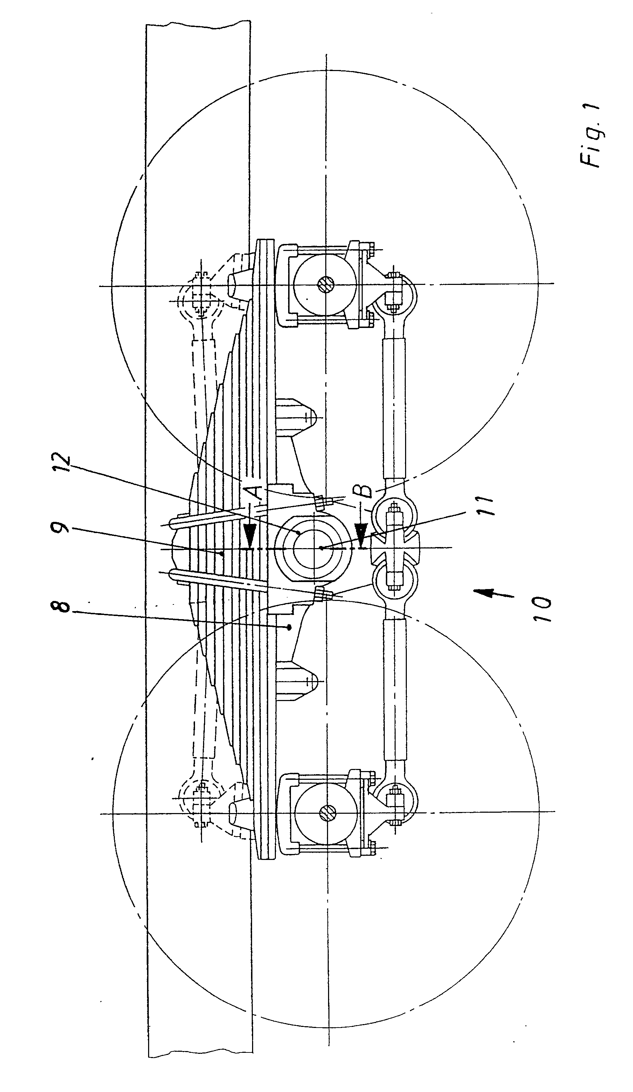

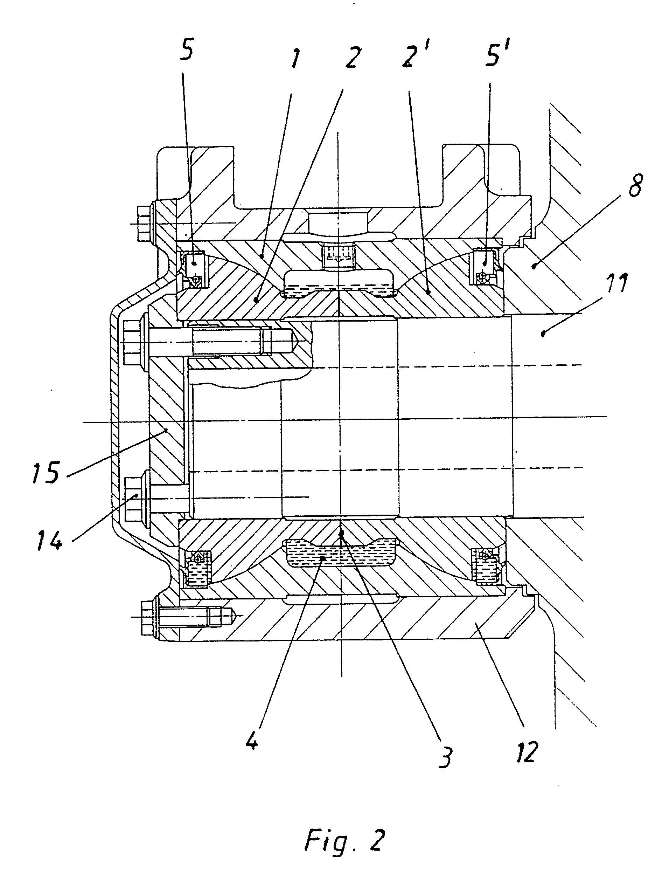

Fig. 1 zeigt das Doppelachsaggregat 10 eines Nutzfahrzeuges. Die Achslasten setzen sich über die Blattfedern 9 und den Lagerbock 8 gegen den Rahmen des Fahrzeugs ab. Der Lagerbock 8 ist fest mit dem Rahmen verbunden. Im Lagergehäuse 12 ist ein Doppelgelenklager angeordnet, das sich auf der Welle 11 abstützt. Nach Fig. 2 besteht das Doppelgelenklager aus einem einstückigen Außenteil 1 und einem zweistückigen Innenteil, bestehend aus den Innenteilen 2 und 2', die an der Stoßstelle 3 mit ihren inneren Enden aneinander anliegen. Die Teile 1 und 2, 2' werden nunmehr so gefertigt, daß, wenn 2 und 2' Stoß an Stoß liegen, ein definiertes Spiel am tragenden Gelenkteil gegeben ist. Das Außenteil 1 weist eine Kammer 4 auf, die mit Schmiermittel gefüllt ist. Das Außen teil 1 und die Innenteile 2, 2' weisen an ihren äußeren Enden Dichtungen 5, 5' auf, die einen Austritt der Schmierstoffe nach außen verhindern. Nach Einschub des fertigen Bausatzes, bestehend aus dem Außenteil 1 und den Innenteilen 2, 2', auf die Welle 11 und in das Lagergehäuse 12 wird über eine Druckscheibe 15 und Schrauben 14 die Einheit festgezogen.

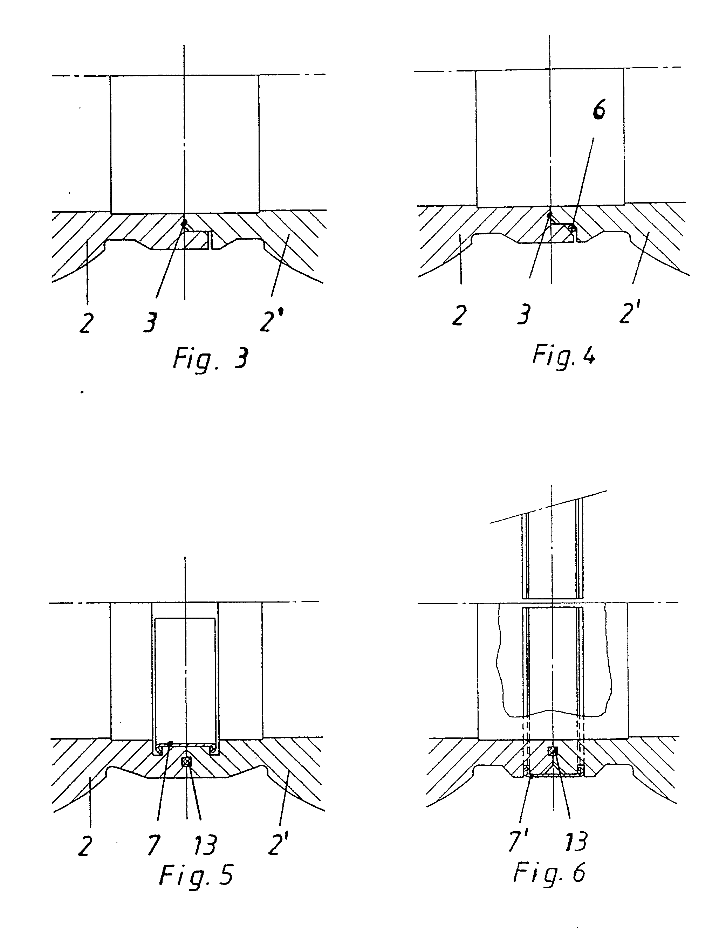

Die Figuren 3 bis 6 zeigen Einzelheiten an der Stoßstelle 3 zwischen den Innenteilen 2 und 2'. So zeigt Fig. 3 eine labyrinthartige Anordnung an der Stoßstelle zwischen den Innenteilen 2 und 2', die eine bessere Dichtung gewährleistet. Das gleiche zeigt Fig. 4, nur daß hier noch eine Dichtung 6 hinzugefügt ist. Fig. 5 zeigt innenseitig der Innenringe 2 und 2t eine Klammer 7, die die Innenteile zu einer versandfertigen Montageeinheit verbindet. Ähnliches zeigt Fig. 6, wo die Klammer außenseitig der Innenringe 2 und 2' angeordnet ist. Eine zwischen der Stoßstelle eingefügte Dichtung 13 sorgt für eine hermetische Abdichtung gegen Austritt der Schmierstoffe.

Bezugzeichenliste
1 Außenteil von Gelenklager
2, 2' Innenteil von Gelenklager
3 Stoßstelle von 2 und 2'
4 Kammer in 1
5, 5' Dichtungen
6 Dichtung
7 Halteklammer
8 Lagerbock
9 Blattfeder
10 Doppelachsaggregat
11 Welle
12 Lagergehäuse in 8
13 Dichtung
14 Schrauben
15 Druckplatte

**Ansprüche**

1. Blattfederlagerung an Doppelachsaggregaten von Nutzfahrzeugen sowie Radlagerungen mit zwei im Abstand zueinander angeordneten Gelenklagern, dadurch gekennzeichnet, daß das Außenteil (1) der Gelenklager einstückig und das Innenteil (2, 2') zweistückig ausgebildet -sind und daß das Außenteil (1) und die Innenteile (2, 2'), über die Stoßstelle (3) der Innenteile (2, 2') angepaßt, mit definiertem Lagerspiel als fertige Montageeinheit ausgelegt sind.

2. Blattfederlagerung sowie Radlagerung nach Anspruch 1, dadurch gekennzeichnet, daß das Außenteil (1) eine Kammer (4) für Schmierstoffe aufweist.

3. Blattfederlagerung sowie Radlagerung nach Anspruch 1 oder 2, dadurch gekennzeichnet, daß zwischen Außenteil (1) und Innenteilen (2, 2') an den äußeren Enden Dichtungen (5) angeordnet sind.

4. Blattfederlagerung sowie Radlagerung nach den Ansprüchen 1 bis 3, dadurch gekennzeichnet, daß die Stoßstelle (3) der Innenteile (2, 2') labyrinthartig ausgebildet ist.

5. Blattfederlagerung sowie Radlagerung nach einem oder mehreren der Anspüche 1 bis 4, dadurch gekennzeichnet, daß an der Stoßstelle (3) zwischen den Innenteilen (2, 2') eine Dichtung (6) angeordnet ist.

6. Blattfederlagerung sowie Radlagerung nach einem oder mehreren der Ansprüche 1 bis 5, dadurch gekennzeichnet, daß die beiden zum Außenteil (1) angepaßten Innenteile (2, 2') mittels einer Halteklammer (7) verbunden sind, die innen oder außen im Bereich der Stoßstelle (3) angeordnet ist.

Fig. 1

4

Fig. 2

Fig. 3

Fig. 4

Fig. 5

Fig. 6

**Europäisches Patentamt**

# EUROPÄISCHER RECHERCHENBERICHT

Nummer der Anmeldung

## EP 90 11 8946

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-2 841 413 (PRINGLE)<br>* Spalte 4, Zeile 20 - Spalte 5, Zeile 26; Figur 6 *<br>— — — | 1 | B 60 G<br>5/053<br>F 16 C 17 10 |
| A | | 2,3 | |
| Y | US-A-3 709 573 (KACARB PROD.)<br>* Spalte 4, Zeile 47 - Spalte 5, Zeile 48; Figur 1; Spalte 9, Zeilen 9-40; Figur 9 *<br>— — — | 1 | |
| A | DE-U-7 600 283 (WARTSTEINER ACHSENFABRIK)<br>* Seite 3, Zeilen 10-21; Seite 2, Zeile 32 - Seite 3, Zeile 16; Figur 3 *<br>— — — | 1 | |
| A | FR-A-2 197 437 (CAN GEARS LTD)<br>* Seite 7, Zeilen 21-30; Figur 5 *<br>— — — | 1 | |
| A | US-A-3 447 841 (SKF)<br>* Spalte 3, Zeile 47 - Spalte 4, Zeile 9; Figur 5 *<br>— — — | 1-3 | |
| A | GB-A-2 165 595 (SKF)<br>* Zusammenfassung; Figur *<br>— — — — — | 6 | |

RECHERCHIERTE SACHGEBIETE (Int. Cl.5)

F 16 C
B 60 G

Der vorliegende Recherchenbericht wurde für alle Patentansprüche erstellt

| Recherchenort | Abschlußdatum der Recherche | Prüfer |
|---|---|---|
| Den Haag | 13 Februar 91 | BRUNELLO B. |